Europäisches Patentamt

European Patent Office

Office européen des brevets

(11) Veröffentlichungsnummer: **0 403 890 B1**

(12) **EUROPÄISCHE PATENTSCHRIFT**

(45) Veröffentlichungstag der Patentschrift: **16.03.94**

(21) Anmeldenummer: **90110852.2**

(22) Anmeldetag: **08.06.90**

(51) Int. Cl.⁵: **C09D 5/00**, C09D 183/04

(54) Beschichtungsmittel zum Herstellen haftungsmindernder Beschichtungen.

(30) Priorität: **21.06.89 DE 3920269**

(43) Veröffentlichungstag der Anmeldung:
**27.12.90 Patentblatt 90/52**

(45) Bekanntmachung des Hinweises auf die
Patenterteilung:
**16.03.94 Patentblatt 94/11**

(84) Benannte Vertragsstaaten:
**AT BE CH DE FR GB IT LI NL SE**

(56) Entgegenhaltungen:
**EP-A- 0 291 213**
**US-A- 4 269 753**
**US-A- 4 528 314**

(73) Patentinhaber: **BAYER AG**

**D-51368 Leverkusen(DE)**

(72) Erfinder: **De Montigny, Armand, Dr.**
**Christian-Hess-Strasse 79**
**D-5090 Leverkusen 1(DE)**
Erfinder: **Steinbach, Hans-Horst, Dr.-Ing.**
**Weyerstrasse 4**
**D-5235 Lindlar(DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die vorliegende Erfindung betrifft ein Material zur haftungsmindernden Ausrüstung von dünnschichtigen Substraten auf Organopolysiloxanbasis. Es ist bekannt, daß man Oberflächen von Papier oder anderen Substraten mit Organopolysiloxanen überziehen kann, um zu verhindern, daß klebrige Stoffe an diesen Oberflächen haften (vgl. z.B. W. Noll, "Chemie und Technologie der Silicone", Weinheim 1968, S. 520 - 521).

An die Verfahren zum Herstellen von klebrige Stoffe abweisenden Überzügen aus Polysiloxanen und an die den Verfahren zugrundeliegenden Materialien werden immer höhere Ansprüche gestellt. Es werden Verfahren und Materialien gefordert, die imstande sind, alle möglichen Substrate, unabhängig von der chemischen und physikalischen Beschaffenheit ihrer Oberfläche, einwandfrei zu beschichten.

Infolge der in jüngster Zeit stark gesteigerten Spannweite zwischen Substraten mit extrem glatten und extrem rauhen Oberflächen, sind die klassischen Siliconbeschichtungsmittel an die Grenzen ihrer Möglichkeiten gestoßen. Dies hat z.B. zur Folge, daß Beschichtungssysteme, die aufgrund ihrer strukturellen Zusammensetzung einwandfreie Filme auf gestrichenen Papieren liefern, bei der Beschichtung extrem glatter Papiere versagen. Sie zeigen bei stärkerer Beanspruchung der Oberfläche starken Abrieb, der sowohl durch längere Aushärtezeiten wie auch durch höhere Aushärtetemperaturen nicht zu vermeiden ist. Umgekehrt versagen Systeme, die mit extrem glatten Papieren einwandfreie Ergebnisse liefern, bei der Beschichtung kritischer, gestrichener Papiere. Somit läßt sich die Spannweite moderner Papiere nur durch den Einsatz mehrerer jeweils strukturell unterschiedlich konzipierter Beschichtungsmittel halbwegs zufriedenstellend überbrücken.

Aufgabe der vorliegenden Erfindung war es somit, ein Beschichtungsmittel zur Verfügung zu stellen, das sowohl geeignet ist, extrem glatte (incl. Kunststoff-) Oberflächen wie auch sehr stark gestrichene oder ähnliche Oberflächen einwandfrei ohne Abrieb zu beschichten. Der Vorteil eines solchen Systems ist dadurch gegeben, daß sich bei der technischen Beschichtung, beim Wechsel der Papierart, ein Auswechseln der Beschichtungsmittel im Vorratsbehälter der Beschichtungsmaschine erübrigt.

Gegenstand der vorliegenden Erfindung ist somit ein Beschichtungsmittel zur Beschichtung von dünnschichtigen Substraten wie Papier, Kunststoffolien und Fasermaterial, das im wesentlichen aus einem Si-gebundenen, ungesättigte KW-Reste tragenden Organopolysiloxan (A) mit einer Viskosität von 50 bis $-10^7$ mPas, einem mindestens drei Wasserstoffsiliciumatome tragenden Organopolysiloxan (B), einem Edelmetallkatalysator (C) und einem die Additionsreaktion bei Raumtemperatur verzögernden Zusatzmittel (D) besteht, und dadurch gekennzeichnet ist, daß Polymer (A), eine Anzahl trifunktioneller und/oder tetrafunktioneller Verzweigungsstellen $T_n$ und/oder $Q_{n'}$, sowie eine Anzahl von ungesättigten KW-Reste tragenden Si-Atomen $X_m$ aufweist, die durch die Gleichungen (a), (b) und (c)

$n + 1 >= m >= 2$ im Falle eines T-haltigen (a)

und

$(2n' + 1) >= m >= 2$ im Falle eines Q-haltigen (b)

und

$[[(n + 1) + (2n' + 1)] - 1] >= m >= 2$ im Falle eines Q- und T-haltigen Organopolysiloxans (c)

bestimmt ist, wobei der Index
n eine Zahl von 0 bis 10 sowie
n' eine Zahl von 0 bis 10 sowie
die Summe aus n + n' eine Zahl von 1 bis 10 bedeutet, wobei die aus Triorganosiloxy-Einheiten bestehenden Endgruppen mindestens einen ungesättigten KW-Rest enthalten.

Beispiele für Polymere, die obigen Bedingungen Genüge tun, setzen sich aus folgenden Bausteinen zusammen:

$[CH_2 = CH(CH_3)_2SiO_{1/2}]_2$ $[(CH_3)_3SiO_{1/2}]_1$ $[(CH_3)_2SiO]_{250}$ $[CH_3SiO_{3/2}]_1$ bzw.

$[CH_2 = CH(CH_3)_2SiO_{1/2}]_2$ $[(CH_3)_3SiO_{1/2}]_2$ $[(CH_3)_2SiO]_{300}$ $[CH_3SiO_{3/2}]_2$ bzw.

$[(CH_2 = CH(CH_3)_2SiO_{1/2}]_3$ $[(CH_3)_3SiO_{1/2}]_1$ $[(CH_3)_2SiO]_{280}$ $[CH_3SiO_{3/2}]_2$ bzw.

$[(CH_2 = CH(CH_3)_2SiO_{1/2}]_3$ $[(CH_3)_3SiO_{1/2}]_2$ $[(CH_3)_2SiO]_{210}$ $[CH_3SiO_{3/2}]_1$ $[SiO_2]_1$ bzw.

$[CH_3)_3SiO_{1/2}]_1$ $[(CH_2 = CH(CH_3)SiO_{1/2}]_3$ $[(CH_3)_2SiO]_x$ $[SiO_2]_1$

wobei x jeweils so gewählt ist, daß die Viskosität des ansatzbereiten, gegebenenfalls mit organischen Lösungsmitteln verdünnten Polymers zwischen 20 und 3000 mPas liegt. Das Gleiche gilt für den Fall, in dem die obigen Polymere in $H_2O$ dispergiert vorliegen. Die Kettenenden müssen mindestens eine ungesättigte KW-Gruppe enthalten, die restlichen ungesättigten KW-Gruppen können in der Kette selbst oder an der Verzweigungsstelle vorliegen.

Polymere obiger Zusammensetzung können nach Verfahren, die dem Fachmann geläufig sind, hergestellt werden. (Vgl. z.B. W. Noll "Chemie u. Technologie der Silicone", Weinheim 1968).

Beispiele für Vernetzer, Katalysatoren und Reaktionsverzögerer sind aus der Literatur bekannt und somit dem Fachmann ebenfalls geläufig.

Der Vorzug der obigen Zusammensetzungen ist dadurch gegeben, daß diese Materialien auf glatten Papieren ebenso einwandfrei einzusetzen sind wie auf rauhen, z.B. stark gestrichenen Papieren. Dies hat zur Folge, daß aufgrund der Universalität in der Anwendung nur Standardansätze bei der technischen Siliconisierung notwendig sind, die einen sogenannten fliegenden Wechsel der Papierarten ermöglichen.

Der Auftrag der obigen Gemische geschieht durch die üblichen Verfahren, z.B. durch Tauchen, Aufwalzen, Sprühen, Streichen, Gießen usw. Die Härtung erfolgt vorzugsweise zwischen 120 und 200°C.

Die Aushärtungsgeschwindigkeit ist praxisgerecht. Sie wird nach oben praktisch nur durch die Laufgeschwindigkeit der Maschinen des derzeitigen Standes der Technik begrenzt. Die nachfolgenden Beispiele sollen das erfindungsgemäße Verfahren weiter erläutern, ohne es jedoch einzuengen.

Die in den folgenden Beispielen verwendeten Polymere enthalten 0,25 % Ethinylcyclohexanol zur Erzielung einer Topfzeit von mehr als acht Stunden.

## Beispiel 1

Eine Mischung aus
12 g eines Vinyl-Polymers der Zusammensetzung

$$[CH_2 = CH(CH_3)_2 SiO_{1/2}]_4 \quad [(CH_3)_2 SiO]_{250} - [CH_3 SiO_{3/2}]_2$$

1,6 g einer Platinkomplexlösung in obigem Polymer mit einem Platingehalt von 300 ppm
0,5 g eines Vernetzers der Formel

$$[(CH_3)_3 SiO_{1/2}]_2 \quad [(CH_3)H \, SiO]_x \quad [(CH_3)_2 SiO]_{1/3 \, x}$$

wobei x > = 20 ist,
wird mit einem Laborrakel auf satiniertes, glattes Papier aufgetragen (z.B. AV 100 der Fa. Kemmerer). Die Filmdicke betrug 2 Mikron. Im Gasraum eines Ofens wird das Papier auf 160°C erhitzt. Nach 10 Sekunden beginnt die Vernetzung. Sie ist nach 11 Sekunden abgeschlossen. Der vernetzte Film ist nicht abriebfest, d.h. er zeigte im Fingerprinttest einen sogenannten "Rub-off".

## Beipiel 2

Eine Mischung aus
12 g eines Vinyl-Polymers der Formel

$$[CH_2 = CH(CH_3)_2 SiO_{1/2}]_3 \quad [(CH_3)_3 SiO_{1/2}]_3$$

$$[(CH_3)_2 SiO]_{250} \quad [CH_3 SiO_{3/2}]_4$$

1,6 g desselben Vinylpolymers mit 300 ppm Pt. in komplexer Form gelöst,
0,5 g des Vernetzers aus Beispiel 1
mit der Viskosität von 800 mm²/sec. wird mit einem Laborrakel auf das in Beispiel 1 näher bezeichnete glatte, satinierte Papier aufgerakelt, so daß ein 2 μ dicker Film entsteht. Dieser Film wird bei 160°C vernetzt. Dies erfolgte nach 11 Sekunden. Bei stark gestrichenem Papier, bei dem Siliconbeschichtungsmittel des Standes der Technik versagen, vernetzte der Film nach 22 Sekunden. Beide Papiere waren einwandfrei, zeigten keinen "Rub-off". Selbst nach 24stündiger Lagerung mit 6 % Wasser bei 50°C zeigte der Siliconfilm keinerlei Abrieb.

## Beispiel 3

Eine Mischung aus
20 g eines Polymers der Formel

$$[(CH_3)_3 SiO_{1/2}]_2 \quad [(CH_3)_2 SiO]_{200} \quad [CH_2 = CH(CH_3)-SiO]_6$$

1,6 g des im obigen Polymer gelösten Platinkomplexes mit 300 ppm Pt.
0,5 g des Vernetzers aus Beispiel 1
der Viskosität von 1000 mm²/sec. wird vergleichend zu den Beispielen 1 und 2 aufgerakelt und bei 160°C vernetzt. Nach 11 Sekunden bei 160°C war der Film auf glatten, satiniertem Papier vernetzt und zeigte keinen Abrieb.

Auf dem rauhen, gestrichenen, kartonierten Papieren war der Film nach 16 Sekunden ausgehärtet und zeigte starken Abrieb, der sich nach einer Lagerung von 24 Stunden vermehrt hatte.

## Beispiel 4

Eine Mischung aus
12 g eines Polymers der Formel

$$[CH_2 = CH(CH_3)_2 SiO_{1/2}]_{2,67} \quad [(CH_3)_3 SiO_{1/2}]_{1,33}$$

$$[(CH_3)_2 SiO]_{250} \quad [CH_3 SiO_{3/2}]_2$$

1,6 g des Katalysators aus Beispiel 2
0,5 g des Vernetzers aus Beispiel 2
wurde auf glattes und rauhes Papier der vorgenannten Beispiele aufgerakelt und bei 160°C vernetzt. Nach 15 Sekunden war der Siliconfilm auf dem glatten Papier abriebfrei und nach 21 Sekunden auf dem rauhen Papier abriebfrei vernetzt.

## Beispiel 5

Eine Mischung aus
6 g des Polymers aus Beispiel 1

6 g des Polymers aus Beispiel 2
1,6 g des Katalysators aus Beispiel 2
0,5 g des Vernetzers aus Beispiel 2
wurde auf glattes und rauhes Papier der vorgenannten Beispiele aufgerakelt und bei 160°C vernetzt. Nach 11 Sekunden war der Film auf dem glatten Papier vernetzt und zeigte hervorragende Eigenschaften bezüglich der Abriebfestigkeit; auch nach 24stündigr Lagerung bei 50°C nach Befeuchten mit 6 % Wasser. Auf stark gestrichenem Papier lag die Aushärtungszeit bei 17 Sekunden. Auch hierbei entstand ein abriebfester, auch in feuchter Atmosphäre lagerfähiger Siliconfilm.

## Patentansprüche

1. Beschichtungsmittel zum Herstellen haftungsmindernder Beschichtungen auf dünnschichtigen Substraten, bestehend im wesentlichen aus
    (A) einem Si-gebundene, ungesättigte Kohlenwasserstoff-Reste tragenden Organopolysiloxan mit einer Viskosität von 50 bis -10$^7$ mPas,
    (B) einen mindestens drei SiH-Gruppen enthaltenden Organopolysiloxan,
    (C) einem Edelmetallkatalysator und
    (D) einem die Additionsreaktion bei Raumtemperatur verzögernden Zusatzmittel,
dadurch gekennzeichnet, daß Polymer (A), eine Anzahl trifunktioneller und/oder tetrafunktioneller Verzweigungsstellen $T_n$ und/oder $Q_{n'}$, sowie eine Anzahl von ungesättigten Kohlenwasserstoff-Reste tragende Si-Atomen $X_m$ aufweist, die durch die Gleichungen (a), (b) und (c)

(a)     $n + 1 >= m >= 2$ im Falle eines T-haltigen

und

(b)     $(2n' + 1) >= m >= 2$ im Falle eines Q-haltigen

und

(c)     $[[(n + 1) + (2n' + 1)] - 1] >= m >= 2$ im Falle eines Q- und T-haltigen Organopolysiloxans

bestimmt ist, wobei der Index
n eine Zahl von 0 bis 10 sowie
n' eine Zahl von 0 bis 10 sowie
die Summe aus n + n' eine Zahl von 1 bis 10 bedeutet,
und die aus Triorganosiloxy-Einheiten bestehenden Endgruppen mindestens einen ungesättigten KW-Rest enthalten.

2. Beschichtungsmittel nach Anspruch 1 und 2, dadurch gekennzeichnet, daß n eine Zahl von 1 bis 3 bedeutet.

3. Beschichtungsmittel nach einem der Ansprüche 1 bis 3, dadurch gekennzeichnet, daß ein Verdünnungsmittel aus einem nicht in die Reaktion eingreifenden Lösungs- und/oder Dispergiermittel eingesetzt wird.

## Claims

1. A coating composition for forming adhesion-reducing coatings on thin-layer substrates, consisting essentially of
    (A) an Si-bonded organopolysiloxane containing unsaturated hydrocarbon radicals and having a viscosity of 50 to -10$^7$ mPa.s,
    (B) an organopolysiloxane (B) containing at least three SiH groups,
    (C) a noble metal catalyst and
    (D) an additive (D) which retards the addition reaction at room temperature,
characterized in that polymer (A) contains a number of trifunctional and/or tetrafunctional branching sites $T_n$ and/or $Q_{n'}$ and a number of Si atoms $X_m$ containing unsaturated hydrocarbon radicals which is determined by equations (a), (b) and (c)

(a)     $n + 1 >= m >= 2$ in the case of a T-containing or ganopolysiloxane     (a)

and

(b)     $(2n' + 1) >= m >= 2$ in the case of a Q-containing or ganopolysiloxane     (b)

and

(c)     $[[(n + 1) + (2n' + 1)] - 1] >= m >= 2$ in the case of a Q- and T-containing organopoly siloxane     (c),

the index
n being a number of 0 to 10 and
n' being a number of 0 to 10 and
the sum of n + n' being a number of 1 to 10, and the terminal groups, which consist of triorganosiloxy units, containing at least one unsaturated hydrocarbon radical.

2. A coating composition as claimed in claims 1 and 2, characterized in that n is a number of 1 to 3.

**3.** A coating composition as claimed in any of claims 1 to 3, characterized in that a diluent of a solvent and/or dispersant which does not participate in the reaction is used.

**Revendications**

**1.** Produit de revêtement pour l'application de revêtements anti-adhérence sur des supports à l'état de couches minces, ce produit consistant essentiellement en

(**A**) un organopolysiloxane portant des radicaux hydrocarbonés insaturés liés au silicium, avec une viscosité de 50 à -10$^7$ mPa.s,

(**B**) un organopolysiloxane contenant au moins trois groupes SiH,

(**C**) un catalyseur à base de métal noble et

(**D**) un additif retardant la réaction d'addition à température ambiante,

caractérisé en ce que le polymère (A) contient un certain nombre de sites de ramification trifonctionnels et/ou tétrafonctionnels $T_n$ et/ou $Q_{n'}$, ainsi qu'un certain nombre d'atomes de Si portant des radicaux hydrocarbonés insaturés $X_m$, satisfaisant aux équations (a), (b) et (c)

(a) $n + 1 >= m >= 2$ dans le cas d'un organopolysiloxane contenant T

et

(b) $(2n' + 1) >= m >= 2$ dans le cas d'un organopolysiloxane contenant Q

et

(c) $[[(n + 1) + (2n' + 1)] -1] >= m >= 2$ dans le cas d'un organopolysiloxane contenant Q et T,

l'indice n étant un nombre de 0 à 10,
l'indice n' un nombre de 0 à 10 et
la somme $n + n'$ ayant une valeur de 1 à 10,
et les groupes terminaux consistant en motifs triorganosiloxy contiennent au moins un radical hydrocarboné insature.

**2.** Produit de revêtement selon revendications 1 et 2, caractérisé en ce que n est un nombre allant de 1 à 3.

**3.** Produit de revêtement selon l'une des revendications 1 à 3, caractérisé en ce que l'on utilise un diluant consistant en un solvant et/ou agent dispersant qui n'intervient pas dans la réaction.